# EUROPEAN PATENT SPECIFICATION

(11) **EP 3 750 941 B1**
(45) Date of publication and mention of the grant of the patent: **01.07.2026**
(21) Application number: 20182967.8
(22) Date of filing: 01.11.2016
(51) Int. Cl.: C08G 69/32, C08G 73/06, C08G 73/10, C08G 73/14, C08L 77/10, C08L 79/08, C09D 179/08

(54) **COMPOSITION FOR PREPARING A POLY(IMIDE-AMIDE) COPOLYMER**
ZUSAMMENSETZUNG ZUR HERSTELLUNG EINES POLY(IMID-AMID)COPOLYMER
COMPOSITION POUR LA PRÉPARATION D'UN COPOLYMÈRE POLY(IMIDE-AMIDE)

(30) Priority: 02.11.2015 KR 20150153019
(43) Date of publication of application: 16.12.2020
(62) Divisional of application: 16196730.2
(73) Proprietor: Samsung Electronics Co., Ltd., Gyeonggi-do 16677 (KR); Samsung SDI Co., Ltd., Gyeonggi-do (KR)
(72) Inventor: HONG, Sung Woo, Seoul (KR); AHN, Chanjae, Gyeonggi-do (KR); JEON, Hyunjeong, Seoul (KR); JEE, Sang Soo, Gyeonggi-do (KR); CHOI, Hongkyoon, Seoul (KR); SOHN, Byunghee, Gyeonggi-do (KR); CHOI, Sungwon, Gyeonggi-do (KR)
(74) Representative: Elkington and Fife LLP

(56) References cited:
- WO-A1-2015/099478
- US-A1- 2014 338 959
- US-A1- 2015 057 426
- US-A1- 2016 194 448

## Description

### FIELD OF THE INVENTION

This disclosure relates to a poly(imide-amide) copolymer, a method for preparing a poly(imide-amide) copolymer, and to an article including a poly(imide-amide) copolymer.

### BACKGROUND OF THE INVENTION

A flexible display, which is not restricted by time and place, that is thin and flexible like paper, ultra light, and consumes a small amount of electricity, has been increasingly in demand as a display for visualizing various information and delivering it to users. The flexible display may be realized by using a flexible substrate, organic and inorganic materials for a low temperature process, flexible electronics, encapsulation, packaging, and the like.

A transparent plastic film for replacing a conventional window cover glass to be used in a flexible display must have high hardness and excellent optical properties. Hardness may be supplemented by a hard coating layer, but in this case also, a base film having a high tensile modulus renders a final film having a high hardness. Desired optical properties include high light transmittance, low haze, low yellowness index, and the like.

There remains a need for a new polymer material having improved optical and mechanical characteristics.

US 2015/057426 discloses a poly(imide-amide) copolymer, and to a composition including a poly(imide-amide) copolymer.

US 2014/338959 discloses a plastic substrate, including: a polyimide film; a hard coating layer formed on one side of the polyimide film; and a transparent electrode layer formed on the other side of the polyimide film.

WO 2015/099478 discloses a transparent polyamide-imide resin and a film using the same.

### SUMMARY OF THE INVENTION

An embodiment provides a composition for preparing a poly(imide-amide) copolymer having improved optical and mechanical properties.

According to the invention, provided is a composition for preparing a poly(imide-amide) copolymer in accordance with claim 1.

The composition may further include a diamine compound represented by Chemical Formula A:

Chemical Formula A H₂N-Ar³-NH₂

wherein in Chemical Formula A, Ar³ is represented by Chemical Formula 2 defined in claim 1.

The dianhydride represented by Chemical Formula 3 may be represented by Chemical Formula 4, Chemical Formula 5, or a combination thereof: 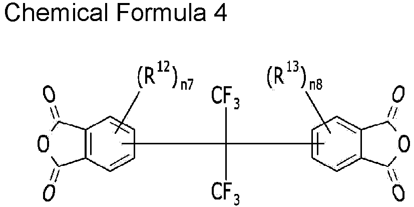 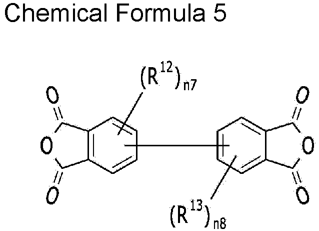 wherein, in Chemical Formulae 4 and 5,
R¹² and R¹³ are the same or different, and are independently a halogen, a hydroxy group, a substituted or unsubstituted C1 to C10 aliphatic organic group, a C6 to C20 aromatic organic group, an alkoxy group of formula -OR²⁰⁸, wherein R²⁰⁸ is a C1 to C10 aliphatic organic group, or a silyl group of formula -SiR²⁰⁹R²¹⁰R²¹¹, wherein R²⁰⁹, R²¹⁰, and R²¹¹ are the same or different, and are each independently hydrogen or a C1 to C10 aliphatic organic group, and
n7 and n8 are each independently integers ranging from 0 to 3.

The dianhydride represented by Chemical Formula 3 may be a combination of the dianhydride represented by Chemical Formula 4 and the dianhydride represented by Chemical Formula 5, in a mole ratio of about 40:60 to about 60:40.

The dianhydride represented by Chemical Formula 3 may be a combination of the dianhydride represented by Chemical Formula 4 and the dianhydride represented by Chemical Formula 5, in a mole ratio of about 45:55 to about 55:45.

The amide structural unit-containing oligomer represented by Chemical Formula 1 may have a number average molecular weight of about 900 Daltons to about 2,500 Daltons.

### DETAILED DESCRIPTION OF THE EMBODIMENTS

This disclosure will be described more fully hereinafter with reference to the accompanying drawings, in which embodiments are shown.

It will be understood that when an element is referred to as being "on" another element, it may be directly on the other element or intervening elements may be present therebetween. In contrast, when an element is referred to as being "directly on" another element, there are no intervening elements present.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another element, component, region, layer, or section. Thus, a first element, component, region, layer, or section discussed below could be termed a second element, component, region, layer, or section without departing from the teachings of the present embodiments.

The terminology used herein is for the purpose of describing particular embodiments only and is not intended to be limiting. As used herein, the singular forms "a," "an" and "the" are intended to include the plural forms as well, unless the context clearly indicates otherwise. The term "or" means "and/or." As used herein, the term "and/or" includes any and all combinations of one or more of the associated listed items. Expressions such as "at least one of," when preceding a list of elements, modify the entire list of elements and do not modify the individual elements of the list.

It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system).

Unless otherwise defined, all terms (including technical and scientific terms) used herein have the same meaning as commonly understood by one of ordinary skill in the art to which this general inventive concept belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

"Mixture" as used herein is inclusive of all types of combinations, including blends, alloys, solutions, and the like.

As used herein, when a specific definition is not otherwise provided, the term "substituted" refers to a group or compound substituted with at least one substituent including a halogen (-F, -Br, -Cl, or -I), a hydroxyl group, a nitro group, a cyano group, an amino group (-NH₂, -NH(R¹⁰⁰) or -N(R¹⁰¹)(R¹⁰²), wherein R¹⁰⁰, R¹⁰¹, and R¹⁰² are the same or different, and are each independently a C1 to C10 alkyl group, an amidino group, a hydrazine group, a hydrazone group, a carboxyl group, an ester group, a ketone group, a substituted or unsubstituted alkyl group, a substituted or unsubstituted alicyclic organic group, a substituted or unsubstituted aryl group, a substituted or unsubstituted alkenyl group, a substituted or unsubstituted alkynyl group, a substituted or unsubstituted heteroaryl group, and a substituted or unsubstituted heterocyclic group, in place of at least one hydrogen of a functional group, or the substituents may be linked to each other to provide a ring.

As used herein, the term "alkyl group" refers to a straight or branched chain saturated aliphatic hydrocarbon having the specified number of carbon atoms and having a valence of at least one. Non-limiting examples of the alkyl group are methyl, ethyl, and propyl.

As used herein, the term "alkoxy group" refers to "alkyl-O-", wherein the term "alkyl" has the same meaning as described above. Non-limiting examples of the alkoxy group are methoxy, ethoxy, propoxy, cyclopropoxy, and cyclohexyloxy.

As used herein, the term "aryl group", which is used alone or in combination, refers to an aromatic hydrocarbon containing at least one ring. Non-limiting examples of the aryl group are phenyl, naphthyl, and tetrahydronaphthyl.

As used herein, when a specific definition is not otherwise provided, the term "alkyl group" refers to a C1 to C30 alkyl group, and specifically a C1 to C15 alkyl group, the term "cycloalkyl group" refers to a C3 to C30 cycloalkyl group, and specifically a C3 to C18 cycloalkyl group, the term "alkoxy group" refer to a C1 to C30 alkoxy group, and specifically a C1 to C18 alkoxy group, the term "ester group" refers to a C2 to C30 ester group, and specifically a C2 to C18 ester group, the term "ketone group" refers to a C2 to C30 ketone group, and specifically a C2 to C18 ketone group, the term "aryl group" refers to a C6 to C30 aryl group, and specifically a C6 to C18 aryl group, the term "alkenyl group" refers to a C2 to C30 alkenyl group, and specifically a C2 to C18 alkenyl group, the term "alkynyl group" refers to a C2 to C30 alkynyl group, and specifically a C2 to C18 alkynyl group, the term "alkylene group" refers to a C1 to C30 alkylene group, and specifically a C1 to C18 alkylene group, and the term "arylene group" refers to a C6 to C30 arylene group, and specifically a C6 to C16 arylene group.

As used herein, when a specific definition is not otherwise provided, the term "aliphatic" refers to a C1 to C30 alkyl group, a C2 to C30 alkenyl group, a C2 to C30 alkynyl group, a C1 to C30 alkylene group, a C2 to C30 alkenylene group, or a C2 to C30 alkynylene group, specifically a C1 to C15 alkyl group, a C2 to C15 alkenyl group, a C2 to C15 alkynyl group, a C1 to C15 alkylene group, a C2 to C15 alkenylene group, or a C2 to C15 alkynylene group, the term "alicyclic organic group" refers to a C3 to C30 cycloalkyl group, a C3 to C30 cycloalkenyl group, a C3 to C30 cycloalkynyl group, a C3 to C30 cycloalkylene group, a C3 to C30 cycloalkenylene group, or a C3 to C30 cycloalkynylene group, specifically a C3 to C15 cycloalkyl group, a C3 to C15 cycloalkenyl group, a C3 to C15 cycloalkynyl group, a C3 to C15 cycloalkylene group, a C3 to C15 cycloalkenylene group, or a C3 to C15 cycloalkynylene group.

As used herein when a definition is not otherwise provided, the term "aromatic organic group" refers to a C6 to C30 group comprising one aromatic ring, two or more aromatic rings fused together to provide a condensed ring system, or two or more moieties independently selected from the foregoing (a single aromatic ring or a condensed ring system) linked through a single bond or through a functional group selected from a fluorenylene group, -O-, -S-, -C(=O)-, -CH(OH)-, -S(=O)₂-, -Si(CH₃)₂-, - (CH₂)ₚ-, wherein 1≤p≤10, -(CF₂)_{q}-, wherein 1≤q≤10, -C(CH₃)₂-, -C(CF₃)₂-, and -C(=O)NH-, and specifically through -S(=O)₂-, for example an aryl group or a C6 to C30 arylene group, specifically a C6 to C16 aryl group or a C6 to C16 arylene group such as phenylene. An example of an aromatic organic group is a fluorenylene group.

As used herein, when a specific definition is not otherwise provided, the term "heterocyclic group" refers to a C2 to C30 cycloalkyl group, a C2 to C30 cycloalkylene group, a C2 to C30 cycloalkenyl group, a C2 to C30 cycloalkenylene group, a C2 to C30 cycloalkynyl group, a C2 to C30 cycloalkynylene group, a C2 to C30 heteroaryl group, or a C2 to C30 heteroarylene group including 1 to 3 heteroatoms selected from O, S, N, P, Si, and a combination thereof in one ring, specifically a C2 to C15 cycloalkyl group, a C2 to C15 cycloalkylene group, a C2 to C15 cycloalkenyl group, a C2 to C15 cycloalkenylene group, a C2 to C15 cycloalkynyl group, a C2 to C15 cycloalkynylene group, a C2 to C15 heteroaryl group, or a C2 to C15 heteroarylene group including 1 to 3 heteroatoms selected from O, S, N, P, Si, and a combination thereof, in one ring.

When a group containing a specified number of carbon atoms is substituted with any of the groups listed in the preceding paragraph, the number of carbon atoms in the resulting "substituted" group is defined as the sum of the carbon atoms contained in the original (unsubstituted) group and the carbon atoms (if any) contained in the substituent. For example, when the term "substituted C1 to C30 alkyl" refers to a C1 to C30 alkyl group substituted with C6 to C30 aryl group, the total number of carbon atoms in the resulting aryl substituted alkyl group is C7 to C60.

As used herein, when a definition is not otherwise provided, "combination" commonly refers to mixing or copolymerization.

As used herein, when a definition is not otherwise provided, "polyimide" may refer to not only "polyimide", but also "polyamic acid" or a combination of "polyimide" and "polyamic acid". Further, the terms "polyimide" and "polyamic acid" may be understood as the same material.

In addition, in the specification, the mark " * " may refer to a point of attachment to another atom.

A research towards light, flexible, and bendable converting mobile devices, such as, a mobile phone or a tablet personal computer, and the like, is currently ongoing. In this regard, a flexible and transparent window film for a display device having a high hardness for replacing a rigid glass placed on top of the mobile devices is desired.

To be used as a window film, a material having high hardness and good optical properties is required. Hardness may be supplemented with a hard coating layer, but a base film having a high tensile modulus may help the final film have a high hardness. Required optical properties include high light transmittance, low haze, low yellowness index, and the like.

Polyimide or poly(imide-aramide) copolymer has excellent mechanical, thermal, and optical properties, and thus is widely used as a plastic substrate for a display device, such as an organic light emitting device (OLED), liquid crystal device (LCD), and the like. In order to use polyimide or poly(imide-amide) film as a window film for a flexible display device, however, further improved mechanical and optical properties, such as, high hardness (or modulus), high transmittance, low yellowness index, and the like, are desired. It is difficult, however, to improve both the mechanical and optical properties at the same time, as the modulus and yellowness index of a polyimide or poly(imide-amide) film have a trade-off relationship with each other.

Meanwhile, there is a problem associated with a production of a by-product, such as a halogenated hydrogen (HX: 'H' indicates hydrogen, and 'X' indicates halogen), for example, HCl, in the conventional process of preparing a poly(imide-amide) copolymer, during the process of preparing an amide structure. The by-product of the halogenated hydrogen may cause corrosion of an element of an apparatus, and thus should necessarily be removed by a precipitation process. In order to remove the by-product, an HX scavenger, such as a tertiary amine, may be added to the reactor, whereby a salt of HX is produced. However, if the produced salt of HX is not removed and a film is produced therefrom, serious deterioration in optical properties of the produced film occurs. Therefore, a precipitation process to remove the salt of HX is required in the conventional method for preparing poly(imide-amide) copolymer. The precipitation process increases total process time and cost, and reduces yield of the final poly(imide-amide) copolymer produced therefrom.

Meanwhile, when an amount of an amide structure in a poly(imide-amide) copolymer is increased to improve a mechanical property of the final poly(imide-amide) copolymer film, an optical property of the film may be deteriorated, as solubility of the copolymer decreases during imidization process due to the increased amount of the amide structure.

The inventors of the present application have found a new method for preparing a poly(imide-amide) copolymer, which includes first preparing an amide group-containing oligomer by reacting a diamine and a diacyl halide for preparing an amide structural unit, and then reacting the amide group-containing oligomer, as a diamine monomer, with a dianhydride to prepare a poly(imide-amide) copolymer. The new method does not include a precipitation process, which is essential to the conventional method for preparing a poly(imide-amide) copolymer.

In the method for preparing a poly(imide-amide) copolymer, it is possible to skip the precipitation process for removing the HX salt, and thus, not only the total process time and cost may be reduced, but also the yield of the final poly(imide-amide) copolymer may increase. Further, as described above, while it is difficult to increase an amount of an amide structural unit in a poly(imide-amide) copolymer greater than a predetermined range and an optical property of the poly(imide-amide) copolymer film having an increased amount of an amide structural unit is deteriorated in the conventional method, HX salt is not produced in the method for preparing a poly(imide-amide) copolymer, whereby no problem of low solubility of a poly(imide-amide) copolymer during imidization process occurs, even when an amount of the amide structural unit increases. That is, it is possible to further increase the amount of an amide structural unit in a poly(imide-amide) copolymer in order to improve a mechanical property of the poly(imide-amide) copolymer, when no deterioration in optical properties of an article prepared from the poly(imide-amide) copolymer occurs, while its mechanical properties are further improved.

Thus, according to an embodiment, provided is a composition for preparing a poly(imide-amide) copolymer, wherein the composition comprises a diamine including an amide structural unit-containing oligomer represented by Chemical Formula 1 and a dianhydride represented by Chemical Formula 3: 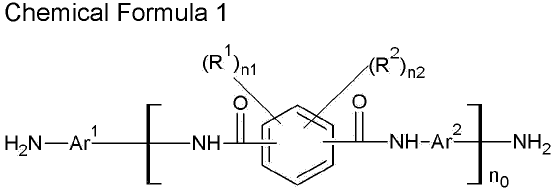 wherein, in Chemical Formula 1,
R¹ and R² are the same or different, and are each independently selected from a halogen, a hydroxyl group, a substituted or unsubstituted C1 to C10 alkyl group, a substituted or unsubstituted C6 to C20 aryl group, or a substituted or unsubstituted C1 to C10 alkoxy group, n1 and n2 are the same or different, and are each independently an integer from 0 to 4, provided that n1 + n2 is an integer ranging from 0 to 4,
n0 is equal to or greater than 1, for example, equal to or greater than 2, for example, equal to or greater than 3, for example, equal to or greater than 4, for example, equal to or greater than 5, or for example, equal to or less than 20, for example, equal to or less than 19, for example, equal to or less than 18, or, for example, equal to or less than 17, and
Ar₁ and Ar₂ are the same or different and are each independently represented by Chemical Formula 2: 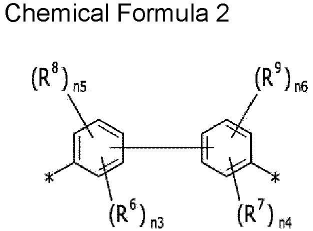 wherein, in Chemical Formula 2,
   R⁶ and R⁷ are the same or different and are each independently an electron withdrawing group selected from -CF₃, -CCl₃, -CBr₃, -Cl₃, -NO₂, -CN, -C(=O)CH₃, and - CO₂C₂H₅,
   R⁸ and R⁹ are the same or different, and are each independently a halogen, a hydroxy group, a substituted or unsubstituted C1 to C10 aliphatic organic group, a substituted or unsubstituted C6 to C20 aromatic organic group, an alkoxy group of formula -OR²⁰⁴, wherein R²⁰⁴ is a C1 to C10 aliphatic organic group, or a silyl group of formula - SiR²⁰⁵R²⁰⁶R²⁰⁷, wherein R²⁰⁵, R²⁰⁶, and R²⁰⁷ are the same or different, and are each independently a hydrogen, a C1 to C10 aliphatic organic group,
   n3 is an integer ranging from 1 to 4, n5 is an integer ranging from 0 to 3, provided that n3 + n5 is an integer ranging from 1 to 4,
   n4 is an integer from 1 to 4, n6 is an integer from 0 to 3, provided that n4 + n6 is an integer ranging from 1 to 4. 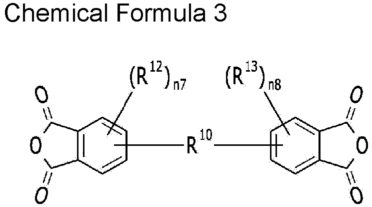 In Chemical Formula 3,
      R¹⁰ is a single bond, a substituted or unsubstituted C1 to C30 aliphatic group, a substituted or unsubstituted C3 to C30 alicyclic organic group, a substituted or unsubstituted C6 to C30 aromatic organic group, or a substituted or unsubstituted C2 to C30 heterocyclic group,
      R¹² and R¹³ are the same or different and are each independently a halogen, a hydroxyl group, a substituted or unsubstituted C1 to C10 aliphatic group, a substituted or unsubstituted C6 to C20 aromatic group, an alkoxy group of formula -OR²⁰⁵, wherein R²⁰⁵ is a C1 to C10 aliphatic organic group, or a silyl group of formula -SiR²⁰⁹R²¹⁰R²¹¹, wherein R²⁰⁹, R²¹⁰, and R²¹¹ are the same or different and are each independently a hydrogen, or a C1 to C10 aliphatic organic group, and
      n7 and n8 are the same or different and are each independently an integer ranging from 0 to 3.

In Chemical Formula 3, R¹⁰ may be single bond, a substituted or unsubstituted C1 to C5 alkylene group, for example, a C1 to C5 alkylene group substituted by a haloalkyl group.

The composition may further include a diamine compound represented by Chemical Formula A:

Chemical Formula A H₂N-Ar³-NH₂

In Chemical Formula A, Ar³ may be represented by the above Chemical Formula 2.

In the composition according to the invention, the diamine represented by Chemical Formula 1 is present in an amount such that the amide structural units derived from the diamine represented by Chemical Formula 1 are equal to or greater than 65 mole percent to 70 mole percent based on the total mole number of the amide structural units and the imide structural units in the poly(imide-amide) copolymer prepared from the composition.

The upper limit of 'n0', the number of the amide structural unit in the oligomer represented by the above Chemical Formula 1, is not particularly limited, and a person of ordinary skill in the pertinent art may select the number, depending on use of the poly(imide-amide) copolymer prepared for controlling the amount of an amide group in the copolymer. For example, 'n0' may be equal to or less than 20, but is not limited thereto. While not wishing to be bound by theory, it is understood that when n0 in Chemical Formula 1 is in the above range, an imide structural unit and an amide structural unit in the prepared poly(imide-amide) copolymer may be appropriately arranged, whereby the properties of the poly(imide-amide) copolymer derived therefrom may be efficiently maintained. As described above, while it is difficult to increase an amount of an amide structural unit in a poly(imide-amide) copolymer greater than a predetermined range in the conventional method including a precipitation process, it is easy to control the number 'n0' in the oligomer represented by Chemical Formula 1 of the poly(imide-amide) copolymer, and thus, the amount of an amide structural unit derived from the oligomer represented by Chemical Formula 1 based on the total mole number of an amide structural unit derived from the oligomer and an imide structural unit derived from the dianhydride represented by Chemical Formula 3 is greater than or equal to 65 mole% to about 70 mole%. When an amount of an amide structural unit increases in the poly(imide-amide) copolymer according to the conventional method, optical properties of the copolymer film may be deteriorated. However, as described in detail in the Examples later, a film prepared from the poly(imide-amide) copolymer obtained using a composition according to an embodiment may have a low yellowness index of less than or equal to about 3.5, for example, less than or equal to about 3.0, for example, less than or equal to about 2.8, when having a thickness of about 50 micrometers (µm) to about 100 µm, measured by an ASTM D 1925 method, even when an amount of an amide structural unit is about 70 mole%. Further, the film may have a tensile modulus of greater than or equal to about 6.0 gigapascals (GPa), for example, greater than or equal to about 6.5 GPa, for example, greater than or equal to about 6.8 GPa according to an ASTM D 882 method. Accordingly, the poly(imide-amide) copolymer film obtained using a composition according to an embodiment may have high optical and mechanical properties. That is, the poly(imide-amide) copolymer film obtained using a composition according to an embodiment may include a high content of an amide structure unit, and thus, high mechanical and optical properties may be obtained.

The dianhydride represented by Chemical Formula 3 may be represented by Chemical Formula 4, Chemical Formula 5, or a combination thereof:

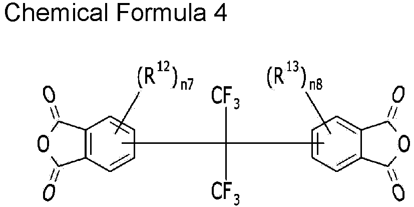

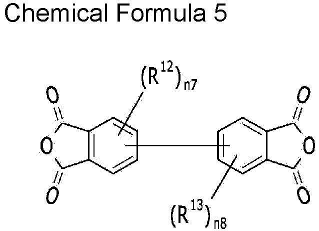

In Chemical Formulae 4 and 5,
R¹² and R¹³ are the same or different, and are independently a halogen, a hydroxy group, a substituted or unsubstituted C1 to C10 aliphatic organic group, a C6 to C20 aromatic organic group, an alkoxy group of formula -OR²⁰⁸, wherein R²⁰⁸ is a C1 to C10 aliphatic organic group, or a silyl group of formula -SiR²⁰⁹R²¹⁰R²¹¹, wherein R²⁰⁹, R²¹⁰, and R²¹¹ are the same or different, and are each independently hydrogen or a C1 to C10 aliphatic organic group, and
n7 and n8 are each independently integers ranging from 0 to 3.

In Chemical Formula 2, both R⁶ and R⁷ may be -CF₃, both n3 and n4 may be 1, and both n5 and n6 may be 0.

In Chemical Formula 3, both n7 and n8 are 0, R¹⁰ may be single bond, or a substituted or unsubstituted C1 to C4 alkylene group.

The dianhydride represented by Chemical Formula 3 may be a combination of the dianhydride represented by Chemical Formula 4 and the dianhydride represented by Chemical Formula 5, in a mole ratio of about 40:60 to about 60:40.

The dianhydride represented by Chemical Formula 3 may be a combination of the dianhydride represented by Chemical Formula 4 and the dianhydride represented by Chemical Formula 5, in a mole ratio of about 45:55 to about 55:45.

While not wishing to be bound by theory, it is understood that by including the dianhydride represented by Chemical Formula 4 and the dianhydride represented by Chemical Formula 5 in the above mole ratio, poly(imide-amide) copolymer prepared therefrom may have an improved surface hardness, high light transmittance, and low yellowness index, when prepared as a film.

The composition of the invention may be used to prepare a poly(imide-amide) copolymer including a structural unit represented by Chemical Formula 6 and a structural unit represented by Chemical Formula 7, where the poly(imide-amide) copolymer includes a structural unit including two or more of the sequentially linked structural units represented by Chemical Formula 6:

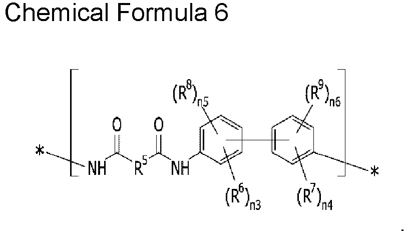

In Chemical Formula 6,
R⁵ is a substituted or unsubstituted phenylene group,
R⁶ to R⁹ and n3 to n6 are the same as defined in Chemical Formula 2.

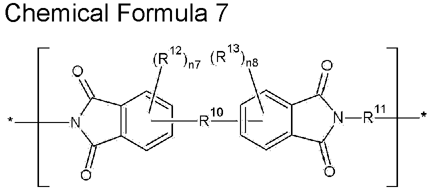

In Chemical Formula 7,
R¹⁰ is single bond, a substituted or unsubstituted C1 to C30 aliphatic organic group, a substituted or unsubstituted C3 to C30 alicyclic organic group, a substituted or unsubstituted C6 to C30 aromatic organic group, or a substituted or unsubstituted C2 to C30 heterocyclic group,
R¹¹ is a substituted or unsubstituted biphenylene group,
R¹² and R¹³ are the same or different, and are each independently a halogen, a hydroxy group, a substituted or unsubstituted C1 to C10 aliphatic organic group, a C6 to C20 aromatic organic group, an alkoxy group of formula -OR²⁰⁸, wherein R²⁰⁸ is a C1 to C10 aliphatic organic group, or a silyl group of formula -SiR²⁰⁹R²¹⁰R²¹¹, wherein R²⁰⁹, R²¹⁰, and R²¹¹ are the same or different, and are each independently hydrogen or a C1 to C10 aliphatic organic group, and
n7 and n8 are each independently integers ranging from 0 to 3.

The structural unit including two or more of the sequentially linked structural units represented by Chemical Formula 6 may include two or more of, three or more of, four or more of, or five or more of the sequentially linked structural units represented by Chemical Formula 6, or may include less than or equal to 20, less than or equal to 19, less than or equal to 18, or less than or equal to 17 of the sequentially linked structural units represented by Chemical Formula 6.

The poly(imide-amide) copolymer may include a structural unit where a terminal of the structural unit represented by Chemical Formula 7 may be linked to a structural unit including two or more of the sequentially linked structural units represented by Chemical Formula 6.

The poly(imide-amide) copolymer may include a structural unit where each of two termini of the structural unit represented by Chemical Formula 7 may be linked to a structural unit including two or more of the sequentially linked structural units represented by Chemical Formula 6.

The structural unit including two or more of the sequentially linked structural units represented by Chemical Formula 6 may have a number average molecular weight of about 900 Daltons to 2,500 Daltons.

The poly(imide-amide) copolymer includes an amide structural unit in an amount of 65 mole% to 70 mole%, based on the total mole number of the amide structural unit and the imide structural unit, which is not achieved by the conventional method for preparing a poly(imide-amide) copolymer including a precipitation process. While not wishing to be bound by theory, it is understood that by including such a high content of an amide structural unit, the poly(imide-amide) copolymer may meet high mechanical and optical properties.

The structural unit represented by Chemical Formula 7 may be at least one of a structural unit represented by Chemical Formula 8 and a structural unit represented by Chemical Formula 9:

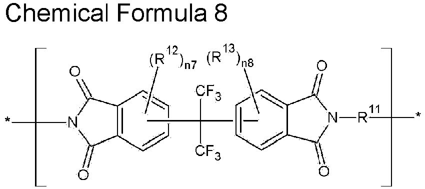

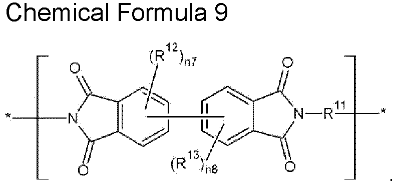

In Chemical Formulae 8 and 9,
R¹¹ to R¹³ and n7 and n8 are the same as defined in Chemical Formula 7.

The dianhydride represented by Chemical Formula 7 may be a combination of the dianhydride represented by Chemical Formula 8 and the dianhydride represented by Chemical Formula 9, in a mole ratio of about 40:60 to about 60:40.

The dianhydride represented by Chemical Formula 7 may be a combination of the dianhydride represented by Chemical Formula 8 and the dianhydride represented by Chemical Formula 9, in a mole ratio of about 45:55 to about 55:45.

By including the dianhydride represented by Chemical Formula 8 and the dianhydride represented by Chemical Formula 9 in the above mole ratio, poly(imide-amide) copolymer prepared therefrom may have an improved surface hardness, high light transmittance, and low yellowness index, when prepared as a film.

The structural unit represented by Chemical Formula 6 may include a structural unit represented by Chemical Formula 10, a structural unit represented by Chemical Formula 11, or a combination thereof:

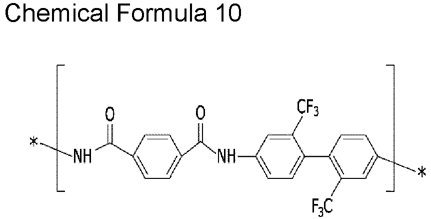

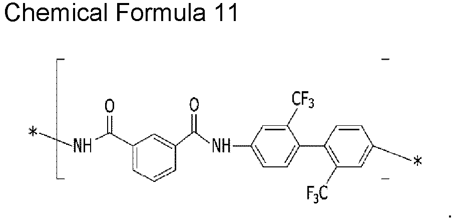

The structural unit represented by Chemical Formula 8 may include a structural unit represented by Chemical Formula 12, and the structural unit represented by Chemical Formula 9 may include a structural unit represented by Chemical Formula 13:

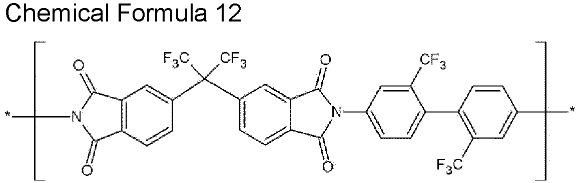

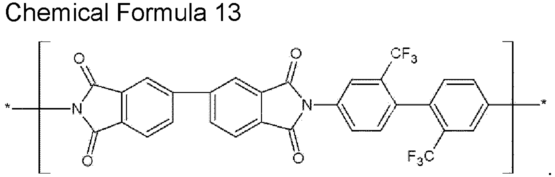

The poly(imide-amide) copolymer may include the structural unit represented by Chemical Formula 10, the structural unit represented by Chemical Formula 12, and the structural unit represented by Chemical Formula 13.

The poly(imide-amide) copolymer may include greater than or equal to about 60 mole% of the structural unit represented by Chemical Formula 10, and less than or equal to about 40 mole% of the structural unit represented by Chemical Formula 12 and the structural unit represented by Chemical Formula 13, where the structural unit represented by Chemical Formula 12 and the structural unit represented by Chemical Formula 13 may be included in a mole ratio of about 40:60 to about 60:40.

The poly(imide-amide) copolymer may include greater than or equal to about 60 mole% of the structural unit represented by Chemical Formula 10, and less than or equal to about 40 mole% of the structural unit represented by Chemical Formula 12 and the structural unit represented by Chemical Formula 13, where the structural unit represented by Chemical Formula 12 and the structural unit represented by Chemical Formula 13 may be included in a mole ratio of about 45:55 to about 55:45.

As described later, the number average molecular weight of the oligomer or the mole number of the amide structural unit contained in the oligomer, and the like, may be easily adjusted by controlling the ratio of the diamine and/or the dicarboxylic acid halide to be used to prepare the oligomer.

The dianhydride represented by Chemical Formula 3 may include a combination of the dianhydride represented by Chemical Formula 4 and the dianhydride represented by Chemical Formula 5 in a mole ratio of 1:0.2 to 4.

As described above, by including the dianhydride represented by Chemical Formula 4 and the dianhydride represented by Chemical Formula 5 in the above mole ratio, the poly(imide-amide) copolymer prepared by reacting the combination of the dianhydride and the diamine including the amide structural unit-containing oligomer represented by Chemical Formula 1 may have an improved surface hardness and coefficient of thermal expansion when prepared as a film, while maintaining high light transmittance and low yellowness index in a good range.

Meanwhile, the amide structural unit-containing oligomer represented by Chemical Formula 1 may be prepared by a known method for preparing a polyamide. Examples of a known method for preparing a polyamide include low temperature polymerization, interface polymerization, melt polymerization, solid polymerization, and the like, and are not limited thereto.

Among the above methods, for example, the low temperature polymerization may include a reaction of a dicarboxylic acid halide and a diamine in a non-proton polar solvent to prepare an amide structural unit-containing oligomer represented by the above Chemical Formula 1. The reaction process may be represented by Reaction Scheme 1 below:

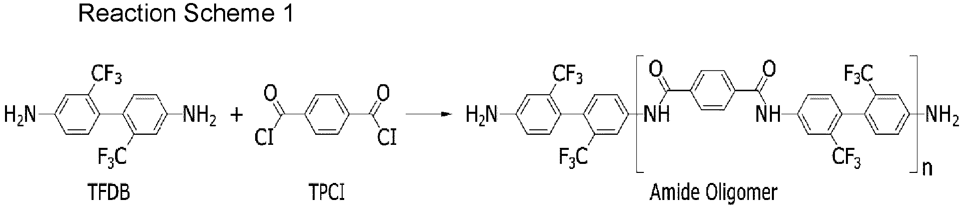

That is, for example, TFDB, as a diamine, and terephthalic acid dichloride, as a carboxylic acid dihalide may be used to react in a mixed solvent of N, N-dimethyl acetamide, which is an aprotic polar solvent, and pyridine, to produce an oligomer including an amide structural unit represented by Chemical Formula 1, as described in the above Reaction Scheme 1.

When producing the oligomer, a diamine and a dicarboxylic acid dihalide may be reacted in a mole ratio of 1:1, and an excess of the diamine rather than the carboxylic acid dihalide may produce an oligomer, of which the two termini include amino groups, respectively. In this case, the unreacted diamine may be present in the final product, which also may react with the dianhydride in the following process as the prepared oligomer to prepare an imide structural unit.

The prepared amide structural unit-containing oligomer may have a number average molecular weight of about 900 Daltons to 2,500 Daltons, which is not limited thereto.

The number average molecular weight of the oligomer may be controlled by adjusting the ratio of the diamine and the carboxylic acid dihalide to be used. By adjusting the number average molecular weight to the above range, solubility or viscosity of the reactants may easily be adjusted in the following reaction with the dianhydride.

The aprotic polar solvent may be, for example, a sulfoxide based solvent such as dimethylsulfoxide, diethylsulfoxide and the like, a formamide based solvent such as N,N-dimethyl formamide, N,N-diethylformamide, and the like, an acetamide based solvent such as N,N-dimethylacetamide, N,N-diethylacetamide and the like, a pyrrolidone based solvent such as N-methyl-2-pyrrolidone, N-vinyl-2-pyrrolidone and the like, a phenol based solvent such as phenol, o-, m- or p-cresol, xylenol, halogenated phenol, catechol, and the like, or hexamethylphosphoramide, γ-butyrolactone, and the like. These solvents may be used either alone or as a mixture. However, this is not limited thereto, and an aromatic hydrocarbon such as xylene and toluene may also be used. Further, in order to promote dissolution of a polymer, an alkaline metal salt or an alkaline earth metal salt in an amount of less than or equal to about 10 % based on the weight of a solvent may be added to the solvent.

The oligomer represented by Chemical Formula 1, prepared from the method as described in the above Reaction Scheme 1, may be reacted with the dianhydride represented by Chemical Formula 3 in accordance with a conventional method to prepare a polyimide. That is, the method may include reacting the oligomer including an amide structural unit represented by Chemical Formula 1 and the dianhydride represented by Chemical Formula 3 in an aprotic polar solvent as described above in a certain mole ratio.

The reaction between the oligomer including an amide structural unit and dianhydride produces a poly(amic acid-amide), which is a precursor of a poly(imide-amide). The prepared poly(amic acid-amide) may be chemically and/or thermally imidized and may be partially or completely imidized to produce a poly(imide-amide) copolymer.

The chemical imidization may be performed by adding an imidizing agent, such as acetic anhydride and/or pyridine, to the poly(amic acid-amide) copolymer, and stirring the mixture. The thermal imidization may be performed by heating the prepared poly(amic acid-amide) copolymer at a predetermined temperature for a certain period of time.

Therefore, the method may further include performing chemical and/or thermal imidization after reacting the amide structural unit-containing oligomer and the dianhydride.

An article including a poly(imide-amide) copolymer prepared using a composition according to an embodiment may be provided.

The article may be a film, a fiber, a coating material, or an adhesive.

The article may be formed of the poly(imide-amide) copolymer through a dry-wet method, a dry method, or a wet method, but is not limited thereto.

When the article is a film, it may be manufactured using a solution including the poly(imide-amide) copolymer through the dry-wet method, where a layer is formed by extruding the solution of the poly(amide-imide) copolymer from a mouth piece on a supporter, such as drum or an endless belt, drying the layer, and evaporating the solvent from the layer until the layer has a self-maintenance property. The drying may be performed, for example, at about 25°C to about 300°C, for about 1 hour or less. When the surface of the drum and/or the endless belt used for the drying process becomes flat, a layer with a flat surface is formed. The layer obtained after the drying process is delaminated from the supporter, and subjected to a wet process, desalted, and/or desolventized. The manufacturing of the film is completed after the layer is elongated, dried, and/or heat treated.

The elongating may be performed at an elongation ratio in terms of surface ratio, which may range from about 0.8 to about 8, for example, about 1.3 to about 8. As used herein, the term "surface ratio" refers to a value obtained by dividing the area of a layer after the elongating, by an area of the layer before the elongating. A value of 1 or less denotes a relaxed state. On the other hand, the elongating may be performed not only in a surface direction but also at a thickness direction.

The heat treatment may be performed at a temperature of about 200°C to about 500°C, for example at about 250°C to about 400°C, for several seconds to about several minutes.

Also, the layer after elongating and heat treatment may be cooled slowly, for example, at a speed of about 50 degrees Centigrade per second (°C/second) or lower.

The layer may be formed as a single layer or as multiple layers.

The article may be a film, and the film may have a yellowness index (YI) of less than or equal to 3 at a thickness of about 50 micrometers (µm) to about 100 micrometers (µm) according to an ASTM D1925 method.

The article may be a film, and the film may have a tensile modulus of greater than or equal to about 4 GPa, for example, of greater than or equal to about 4.5 GPa, for example, of greater than or equal to about 5.0 GPa, for example, of greater than or equal to about 5.4 GPa, for example, of greater than or equal to about 5.6 GPa, for example, of greater than or equal to about 6.0 GPa, at a thickness of about 50 µm to about 100 µm according to an ASTM D882 method.

That is, the article may maintain excellent optical properties of the polyimide or poly(imide-amide) copolymer, for example, a low yellowness index (YI), while having an improved tensile modulus.

While not wishing to be bound by theory, it is understood that when a tensile modulus of an article is within the above range, the article may have a high hardness, and when the yellowness index is within the above range, the article may be transparent and colorless.

A display device including the article may be provided.

As described above, the article may have a low yellowness index, while having a high tensile modulus, thus, can be used as a window film for a display device, for example, a flexible display device.

Hereafter, the technology of this disclosure is described in detail with reference to examples.

### Examples

### Synthesis Example 1: Preparation of amide structural unit-containing oligomer including 60 mole% of amide structural unit

An oligomer having two TFDB (2,2'-bis(trifluoromethyl)benzidine) linked to each one of its two terimini to form an aramid structure is prepared in accordance with Reaction Scheme 1 below:

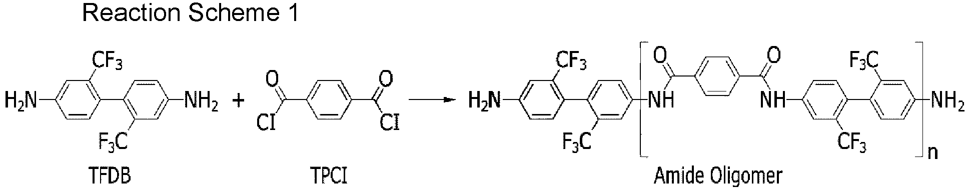

That is, 1 molar equivalent (0.127 mole, 40,80 grams (g) of 2,2'-bis(trifluoromethyl)benzidine (TFDB) and 2.4 molar equivalent (0.306 mole, 21.49 g) of pyridine are dissolved in 700 g of N,N-dimethyl acetamide (DMAc) as a solvent in a roundbottomed flask, and 50 mililiters of DMAC is further added to the flask to dissolve the remaining TFDB. Then, 0.6 molar equivalent (0.076 mole, 15.52 g) of terephthaloyl chloride (TPCI) is divided into 4 portions, which are individually added, each portion at a time, to be mixed with the TFDB solution in DMAC at 25°C. The mixture is then vigorously stirred and reacted for 15 minutes at room temperature.

The resultant solution is further stirred under a nitrogen atmosphere for 2 hours, and then added to 7 liters (L) of water containing 350 g of NaCl. The mixture is subsequently stirred for 10 minutes. Subsequently, a solid produced therein is filtered, re-suspended twice, and then re-filtered by using 5 L of deionized water. The water remaining in the final product on the filter is removed as much as possible by thoroughly pressing the precipitate on a filter, and the precipitate is then dried at 80 °C under vacuum, to obtain an amide structural unit-containing oligomer, as a final product, as described in the above Reaction Scheme 1. The prepared amide structural unit-containing oligomer has a number average molecular weight of about 997 grams per mole (gram/mole).

### Synthesis Examples 2 to 8: Preparation of amide structural unit-containing oligomers including 20 mole% to 70 mole% of amide structural unit

The same method as Synthesis Example 1 is used to prepare amide structural unit-containing oligomers according to Synthesis Examples 2 to 8, each of which includes 20 mole%, 30 mole%, 40 mole%, 50 mole%, 55 mole%, 65 mole%, and 70 mole% of amide structural unit, respectively.

### Reference Example 1: Synthesis of a poly(imide-amide) copolymer containing 60 mole% of amide structural unit

20 grams (0.2 mole) of the amide structural unit-containing oligomer prepared in Synthesis Example 1 are charged into a 4-neck double-walled reactor, pre-heated to 30°C and equipped with a mechanical stirrer and a nitrogen inlet, and 143 mililiters of dimethyl acetamide (DMAc) as a solvent are added thereto. The mixture is stirred at to 30°C, under nitrogen atmosphere, until the oligomer is completely dissolved. Then, 4.46 grams (0.1 mole) of 2,2-bis-(3,4-dicarboxyphenyl)hexafluoropropane dianhydride) (6FDA) and 2.95 grams (0.1 mole) of 3,3',4,4'-biphenyltetracarboxylic dianhydride (BPDA) are slowly added to the oligomer dissolved solution. After 10 mililiters of DMAc are further added to the solution, the solution is stirred for 48 hours to obtain a poly(amic acid-amide) copolymer, of which the solid content is 16%.

After cooling down the temperature of the poly(amic acid-amide) solution to 25°C, 6.14 grams of acetic acid anhydride are added to the solution, and the mixture is stirred for 30 minutes. Then, 4.76 grams of pyridine are added thereto, and the mixture is further stirred for 48 hours to obtain a poly(imide-amide) copolymer solution.

### Reference Examples 2 to 7 and Examples 8 to 11: Synthesis of a poly(imide-amide) copolymers containing 20 mole% to 70 mole% of amide structural unit

The same method as in Reference Example 1 is used to prepare poly(imide-amide) copolymer solutions, except for using amide structural unit-containing oligomers including 20 mole%, 30 mole%, 40 mole%, 50 mole%, 55 mole%, 65 mole%, and 70 mole% of amide structural unit, respectively, prepared in Synthesis Examples 2 to 8, and TFDB and 6FDA in amount as described in Table 1 below.

### Comparative Example 1: Synthesis of a poly(imide-amide) copolymer containing 50 mole% of amide structural unit using a method that includes a precipitation process

162 grams of N,N-dimethyl acetamide (DMAc) are charged into a 250 mililiters reactor, equipped with a stirrer, a nitrogen inlet, a loading funnel, a thermostat, and a cooler, under nitrogen atmosphere, and the temperature of the reactor is set on 25°C. 15.84 grams of 2,2-bis(trifluoromethyl)benzidine (TFDB) are added to the solution to be dissolved, and the solution is maintained at 25°C. Then, 7.83 grams of pyridine are added to the solution to neutralize HCl, which will be produced later from the reaction of TFDB and TPCI. To this solution, 5.02 grams of TPCI are slowly added and allowed to react. Then, 5.502 grams of 2,2-bis-(3,4-dicarboxyphenyl)hexafluoropropane dianhydride (6FDA) and 3.64 grams of 3,3',4,4'-biphenyltetracarboxylic dianhydride (BPDA) are added, and stirred for some time to dissolve and react. The temperature of the solution is maintained at 25°C. After completion of the reaction, a poly(amic acid-amide) copolymer solution containing about 15 weight% of solid content is obtained therefrom.

Then, 5.87 grams of pyridine and 7.57 grams of acetic acid anhydride are added to the poly(amic acid-amide) copolymer solution, and the solution is stirred for 30 minutes at room temperature to obtain a poly(imide-aide) copolymer solution.

The resultant solution is poured into deionized water, grinded, and filtered. This process is repeated twice, and the resultant is immersed in ethanol for 2 hours, followed by filtration to obtain powder. The powder is dried in vacuum at 120°C to obtain a poly(imide-amide) copolymer powder. The obtained solid poly(imide-amide) copolymer powder is dissolved in N,N-dimethyl acetamide (DMAc) to obtain a poly(imide-amide) copolymer solution.

1.17 grams of pyridine and 1.51 grams of acetic acid anhydride are added to 30 grams of the solid of the obtained poly(imide-amide) copolymer solution, and stirred for 48 hours to perform a second imidization process to obtain a final poly(imide-amide) copolymer solution.

### Comparative Example 2: Synthesis of a poly(imide-amide) copolymer containing 60 mole% of amide structural unit using a method that includes a precipitation process

The same method as in Comparative Example 1 is used to prepare a poly(imide-amide) copolymer solution, except for using 9.90 grams of pyridine, which are initially added, 16.70 grams of TFDB, 6.35 grams of TPCI, 3.48 grams of 6FDA, 3.84 grams of BPDA, 5.38 grams of acetic acid anhydride, 4.98 grams of pyridine, and 0.99 grams and 1.28 grams of pyridine and acetic acid anhydride, respectively, which are used in a second imidization process, per 30 grams of solid of the poly(imide-amide) copolymer solution.

### Comparative Example 3: Synthesis of a poly(imide-amide) copolymer containing 70 mole% of amide structural unit using a method that includes a precipitation process

The same method as in Comparative Example 1 is used to prepare a poly(imide-amide) copolymer solution, except for using 11.90 grams of pyridine, which are initially added, 17.20 grams of TFDB, 7.63 grams of TPCI, 3.58 grams of 6FDA, 2.37 grams of BPDA, 4.94 grams of acetic acid anhydride, 3.84 grams of pyridine, and 0.76 grams and 0.99 grams of pyridine and acetic acid anhydride, respectively, which are used in a second imidization process, per 30 grams of solid of the poly(imide-amide) copolymer solution.

### Comparative Example 4: Synthesis of a poly(imide-amide) copolymer containing 50 mole% of amide structural unit using a method that includes a precipitation process

The same method as in Comparative Example 1 is used to prepare a poly(imide-amide) copolymer solution, except for using TFDB and 6FDA in an amount as described in Table 1 below.

### Preparation Example and Evaluation: Preparation and Evaluation of poly(imide-amide) copolymer film

Each of the poly(imide-amide) copolymer solutions prepared in the Examples and Comparative Examples are coated on a glass substrate and casted, and dried on a hot plate of 80°C for 1 hour. The glass coated with the solution is put into an oven and heated to 250°C at a heating temperature of 3°C per minute. The temperature is slowly cooled down, and the film is separated from the glass substrate to obtain a poly(imide-amide) copolymer film having a thickness described in Table 1 below.

The yellowness index (YI) is measured for a film having a thickness of about 50 micrometers, according to an ASTM D1925 method.

The tensile modulus is measured by using an ASTM D882 method.

**Table 1**

| | Composition (mol%) | | | | YI (@50 µm) | Tensile modulus (GPa) |
|---|---|---|---|---|---|---|
| | TFDB | TPCI | BPDA | 6FDA | | |
| | | | | | | |
| Comparative Example 1 | 100 | 50 | 25 | 25 | 3.0 | 5.8 |
| Comparative Example 2 | 100 | 60 | 25 | 15 | 2.9 | 5.9 |
| Comparative Example 3 | 100 | 70 | 15 | 15 | Gelation when polymerized, and whiteness when fabricated in a film | Gelation when polymerized, and whiteness when fabricated in a film |
| Comparative Example 4 | 100 | 50 | 22.5 | 27.5 | 3.0 | 5.6 |
| Reference Example 1 | 100 | 60 | 18 | 22 | 2.5 | 6.0 |
| Reference Example 2 | 100 | 20 | 10 | 70 | 1.5 | 4.0 |
| Reference Example 3 | 100 | 30 | 10 | 60 | 1.6 | 4.3 |
| Reference Example 4 | 100 | 40 | 10 | 50 | 1.6 | 4.6 |
| Reference Example 5 | 100 | 50 | 22.5 | 27.5 | 2.8 | 5.4 |
| Reference Example 6 | 100 | 50 | 25 | 25 | 3.0 | 5.8 |
| Reference Example 7 | 100 | 55 | 19.25 | 24.75 | 2.4 | 5.6 |
| Example 8 | 100 | 65 | 15.75 | 19.25 | 2.7 | 6.1 |
| Example 9 | 100 | 70 | 13.5 | 16.5 | 2.6 | 6.1 |
| Example 10 | 100 | 70 | 15 | 15 | 2.8 | 6.8 |
| Example 11 | 100 | 70 | 16.5 | 13.5 | 3.3 | 6.8 |

As shown in Table 1, the films prepared from the poly(imide-amide) copolymers prepared using a composition according to an embodiment has low yellowness index, such as, less than or equal to about 3, at most 3.3, and has high tensile modulus of greater than or equal to 4.0 gigapascals (GPa). For example, the films prepared from the poly(imide-amide) copolymers according to Reference Examples 1 and 5 to 7 and Examples 8 to 11, each of which contains greater than or equal to 50 mole% of amide structural unit exhibit low values of YI, for example, less than or equal to about 3.5 of YI, and high values of tensile modulus, for example, greater than or equal to about 5.4 GPa, regardless of containing a high content of amide structural unit. Further, the film prepared from the poly(imide-amide) copolymer according to Reference Example 1, which includes 60 mole% of amide structural unit, lower YI and higher tensile modulus than the film according to Comparative Example 2, which also includes 50 mole% of amide structural unit.

On the contrary, the film prepared from the poly(imide-amide) copolymer according to Comparative Example 3, which includes 70 mole% of an amide structural unit and is prepared by using a conventional method including the precipitation process, exhibits whiteness when prepared as a film due to gelation during polymerization process. In order to prevent whiteness, 3 weight% of LiCl, based on the weight of the poly(imide-amide) copolymer solution, is added to the solution for polymerization, from which a film exhibiting about 4.0 of YI and about 6.6 GPa of tensile modulus is prepared. In this case, due to the increased content of an amide structural unit (i.e., 70 mol%) compared to the film according Reference Example 1, the film has an increased mechanical strength, i.e., tensile modulus, but has a deteriorated optical property, i.e., YI.

As described above, the film fabricated from a poly(imide-amide) copolymer prepared by using a composition according to an embodiment that does not need a precipitation process has improved mechanical strength due to a high content of an amide structural unit, as well as excellent optical properties regardless of the high content of an amide structural unit.

Meanwhile, by using a composition according to an embodiment, the total process time dramatically reduces. Specifically, when preparing a poly(imide-amide) copolymer using a composition according to an embodiment, only two process steps are needed to prepare the poly(imide-amide) copolymer, including the first step to prepare a poly(amic acid-amide) copolymer, and the second step to convert the poly(amic acid-amide) copolymer to a poly(imide-amide) copolymer using a chemical imidization process. On the contrary, according to Comparative Example 2, as many as 6 process steps are required. That is, the first step to prepare a poly(amic acid-amide) copolymer, the second step for the first chemical imidization, the third step to the precipitation process to remove HCl, the fourth step to dry the prepared poly(imide-amide) copolymer, the fifth step to redissolve the dried copolymer in a solvent, and the sixth step to perform the second chemical imidization process. The total time required for completing the six steps of the processes is about 12 days. In contrast, the total time for completing the processes using a composition according to an embodiment is only 4 days.

As shown above, the poly(imide-amide) copolymer prepared using a composition according to an embodiment may have a higher content of an amide structural unit, as it is prepared from an amide structural unit-containing oligomer, and thus an article prepared from the poly(imide-amide) copolymer may exhibit a high mechanical strength, as well as a low yellowness index. Further, the total process time for preparing a poly(imide-amide) copolymer drastically reduces, and the yield of the prepared poly(imide-amide) copolymer significantly increases.

The invention is defined as within the scope of the appended claims.

## Claims

1. A composition for preparing a poly(imide-amide) copolymer, wherein the composition comprises a diamine represented by Chemical Formula 1, and a dianhydride represented by Chemical Formula 3: 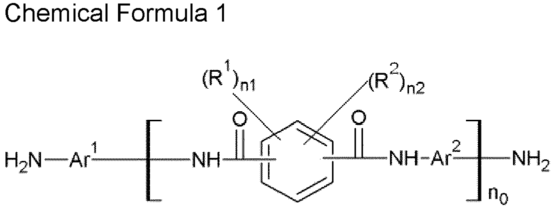 wherein, in Chemical Formula 1,
R¹ and R² are the same or different, and are each independently a halogen, a hydroxyl group, a substituted or unsubstituted C1 to C10 alkyl group, a substituted or unsubstituted C6 to C20 aryl group, or a substituted or unsubstituted C1 to C10 alkoxy group,
n0 is equal to or greater than 1,
n1 and n2 are the same or different, and are each independently an integer from 0 to 4, provided that n1 + n2 is an integer ranging from 0 to 4, and
Ar₁ and Ar₂ are the same or different and are each independently represented by Chemical Formula 2: 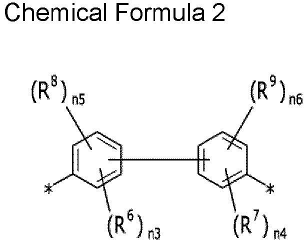 wherein, in Chemical Formula 2,
R⁶ and R⁷ are the same or different and are each independently an electron withdrawing group selected from -CF₃, -CCl₃, -CBr₃, -Cl₃, -NO₂, -CN, -C(=O)CH₃, and -CO₂C₂H₅,
R⁸ and R⁹ are the same or different and are each independently a halogen, a substituted or unsubstituted C1 to C10 aliphatic group, a substituted or unsubstituted C6 to C20 aromatic group, an alkoxy group of formula -OR²⁰⁴, wherein R²⁰⁴ is a C1 to C10 aliphatic organic group, or a silyl group of formula -SiR²⁰⁶R²⁰⁶R²⁰⁷, wherein R²⁰⁵, R²⁰⁶, and R²⁰⁷ are the same or different and are each independently a hydrogen or a C1 to C10 aliphatic organic group, and
n3 is an integer from 1 to 4, n5 is an integer from 0 to 3, provided that n3 + n5 is an integer ranging from 1 to 4,
n4 is an integer from 1 to 4, n6 is an integer from 0 to 3, provided that n4 + n6 is an integer ranging from 1 to 4; 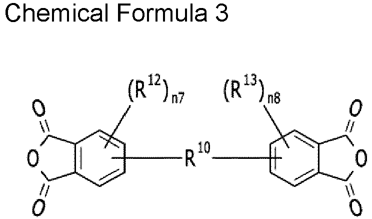 wherein, in Chemical Formula 3,
R¹⁰ is a single bond, or a substituted or unsubstituted C1 to C30 aliphatic group, a substituted or unsubstituted C3 to C30 alicyclic organic group, a substituted or unsubstituted C6 to C30 aromatic organic group, or a substituted or unsubstituted C2 to C30 heterocyclic group,
R¹² and R¹³ are the same or different and are each independently a halogen, a hydroxyl group, a substituted or unsubstituted C1 to C10 aliphatic group, a substituted or unsubstituted C6 to C20 aromatic group, an alkoxy group of formula - OR²⁰⁵, wherein R²⁰⁵ is a C1 to C10 aliphatic organic group, or a silyl group of formula -SiR²⁰⁹R²¹⁰R²¹¹, wherein R²⁰⁹, R²¹⁰, and R²¹¹ are the same or different and are each independently a hydrogen or a C1 to C10 aliphatic organic group, and
n7 and n8 are the same or different and are each independently an integer ranging from 0 to 3,
wherein the diamine represented by Chemical Formula 1 is present in an amount such that the amide structural units derived from the diamine represented by Chemical Formula 1 are present in an amount of 65 mole percent to 70 mole percent based on the total mole number of the amide structural units and the imide structural units in the poly(imide-amide) copolymer prepared from the composition.

2. The composition for preparing a poly(imide-amide) copolymer according to claim 1, wherein the composition further comprises a diamine represented by Chemical Formula A:
Chemical Formula A H₂N-Ar³-NH₂
wherein in Chemical Formula A,
Ar³ is represented by the above Chemical Formula 2.

3. The composition for preparing a poly(imide-amide) copolymer according to Claims 1 or 2, wherein the dianhydride represented by Chemical Formula 3 is represented by Chemical Formula 4, Chemical Formula 5, or a combination thereof: 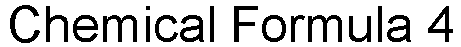 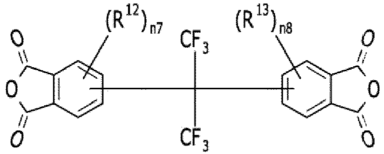 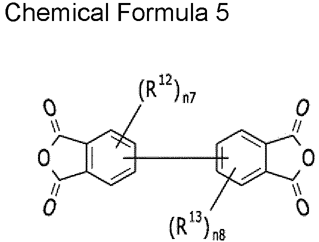 wherein, in Chemical Formulae 4 and 5,
R¹² and R¹³ are the same or different, and are independently a halogen, a hydroxy group, a substituted or unsubstituted C1 to C10 aliphatic organic group, a C6 to C20 aromatic organic group, an alkoxy group of formula -OR²⁰⁸, wherein R²⁰⁸ is a C1 to C10 aliphatic organic group, or a silyl group of formula -SiR²⁰⁹R²¹⁰R²¹¹, wherein R²⁰⁹, R²¹⁰, and R²¹¹ are the same or different, and are each independently hydrogen or a C1 to C10 aliphatic organic group, and
n7 and n8 are each independently integers ranging from 0 to 3.

4. The composition for preparing a poly(imide-amide) copolymer according to any one of Claims 1 to 3, wherein in Chemical Formula 1, both n1 and n2 are 0.

5. The composition for preparing a poly(imide-amide) copolymer according to any one of Claims 1 to 4, wherein in Chemical Formula 2, R⁶ and R⁷ are each independently -CF₃, and n5 and n6 are each independently an integer of 0.

6. The composition for preparing a poly(imide-amide) copolymer according to any one of Claims 1 to 5, wherein the Chemical Formula 1 is represented by the following chemical formula: 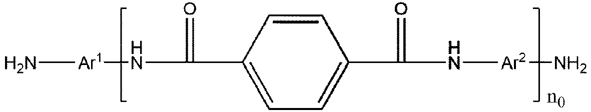 wherein in the above chemical formula,
Ar¹ and Ar² are the same and are each independently represented by the following chemical formula: 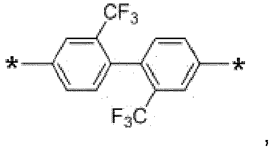 and
n0 is the same as defined in Chemical Formula 1.

7. The composition for preparing a poly(imide-amide) copolymer according to Claim 3, wherein the dianhydride represented by Chemical Formula 3 is a combination of the dianhydride represented by Chemical Formula 4 and the dianhydride represented by Chemical Formula 5, wherein the dianhydride represented by Chemical Formula 4 and the dianhydride represented by Chemical Formula 5 are present in a mole ratio of 40:60 to 60:40.

8. The composition for preparing a poly(imide-amide) copolymer according to any one of Claims 1 to 7, wherein in Chemical Formula A, Ar³ is represented by the following chemical formula:

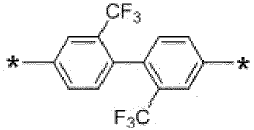

9. The composition for preparing a poly(imide-amide) copolymer according to any one of Claims 1 to 8, wherein the diamine represented by Chemical Formula 1 has a number average molecular weight of 900 Daltons to 2,500 Daltons.

10. The composition for preparing a poly(imide-amide) copolymer according to any one of Claims 1 to 9, wherein in Chemical Formula 1, n0 is an integer of greater than or equal to 1 and less than or equal to 20.

## Patentansprüche

1. Zusammensetzung zur Herstellung eines Poly(imid-amid)Copolymers, wobei die Zusammensetzung ein Diamin dargestellt durch die chemische Formel 1 und ein Dianhydrid dargestellt durch die chemische Formel 3 umfasst: 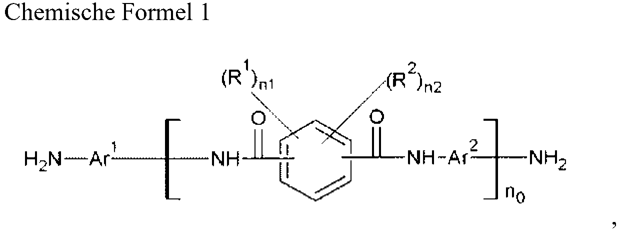 wobei in der chemischen Formel 1
R¹ und R² gleich oder unterschiedlich sind und jeweils unabhängig ein Halogen, eine Hydroxylgruppe, eine substituierte oder unsubstituierte C1- bis C10-Alkylgruppe, eine substituierte oder unsubstituierte C6- bis C20-Arylgruppe oder eine substituierte oder unsubstituierte C1- bis C10-Alkoxygruppe sind,
n0 gleich oder größer als 1 ist,
n1 und n2 gleich oder unterschiedlich sind und jeweils unabhängig eine ganze Zahl von 0 bis 4 sind, vorausgesetzt, dass n1 + n2 eine ganze Zahl ist, die von 0 bis 4 reicht, und
Ar₁ und Ar₂ gleich oder unterschiedlich sind und jeweils unabhängig durch die chemische Formel 2 dargestellt sind: 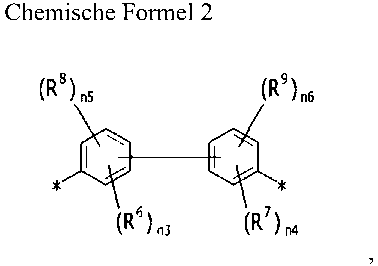 wobei in der chemischen Formel 2
R⁶ und R⁷ gleich oder unterschiedlich sind und jeweils unabhängig eine elektronenziehende Gruppe ausgewählt aus -CF₃, -CCl₃, -CBr₃, -Cl₃, -NO₂, -CN, -C(=O)CH₃ und -CO₂C₂H₅ sind,
R⁸ und R⁹ gleich oder unterschiedlich sind und jeweils unabhängig ein Halogen, eine substituierte oder unsubstituierte aliphatische C1- bis C10-Gruppe, eine substituierte oder unsubstituierte aromatische C6- bis C20-Gruppe, eine Alkoxygruppe der Formel -OR²⁰⁴, wobei R²⁰⁴ eine aliphatische organische C1- bis C10-Gruppe ist, oder eine Silylgruppe der Formel - SiR²⁰⁵R²⁰⁶R²⁰⁷, wobei R²⁰⁵, R²⁰⁶ und R²⁰⁷ gleich oder unterschiedlich sind und jeweils unabhängig ein Wasserstoff oder eine aliphatische organische C1- bis C10-Gruppe sind, sind, und
n3 eine ganze Zahl von 1 bis 4 ist, n5 eine ganze Zahl von 0 bis 3 ist, vorausgesetzt, dass n3 + n5 eine ganze Zahl ist, die von 1 bis 4 reicht,
n4 eine ganze Zahl von 1 bis 4 ist, n6 eine ganze Zahl von 0 bis 3 ist, vorausgesetzt, dass n4 + n6 eine ganze Zahl ist, die von 1 bis 4 reicht; 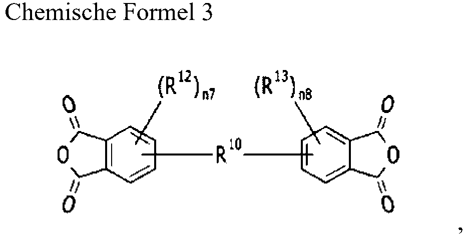 wobei in der chemischen Formel 3
R¹⁰ eine Einfachbindung oder eine substituierte oder unsubstituierte aliphatische C1- bis C30-Gruppe, eine substituierte oder unsubstituierte alicyclische organische C3- bis C30-Gruppe, eine substituierte oder unsubstituierte aromatische organische C6- bis C30-Gruppe oder eine substituierte oder unsubstituierte heterocyclische C2- bis C30-Gruppe ist,
R¹² und R¹³ gleich oder unterschiedlich sind und jeweils unabhängig ein Halogen, eine Hydroxylgruppe, eine substituierte oder unsubstituierte aliphatische C1- bis C10-Gruppe, eine substituierte oder unsubstituierte aromatische C6- bis C20-Gruppe, eine Alkoxygruppe der Formel -OR²⁰⁵, wobei R²⁰⁵ eine aliphatische organische C1- bis C10-Gruppe ist, oder eine Silylgruppe der Formel -SiR²⁰⁹R²¹⁰R²¹¹, wobei R²⁰⁹, R²¹⁰ und R²¹¹ gleich oder unterschiedlich sind und jeweils unabhängig ein Wasserstoff oder eine aliphatische organische C1- bis C10-Gruppe sind, sind, und
n7 und n8 gleich oder unterschiedlich sind und jeweils unabhängig eine ganze Zahl sind, die von 0 bis 3 reicht,
wobei das Diamin dargestellt durch die chemische Formel 1 in einer Menge vorhanden ist, sodass die Amidstruktureinheiten, die von dem Diamin dargestellt durch die chemische Formel 1 abgeleitet sind, in einer Menge von 65 Molprozent bis 70 Molprozent basierend auf der Gesamtmolzahl der Amidstruktureinheiten und der Imidstruktureinheiten in dem Poly(imid-amid)Copolymer, das aus der Zusammensetzung hergestellt ist, vorhanden sind.

2. Zusammensetzung zur Herstellung eines Poly(imid-amid)Copolymers nach Anspruch 1, wobei die Zusammensetzung ferner ein Diamin dargestellt durch die chemische Formel A umfasst:
Chemische Formel A H₂N-Ar³-NH₂ ,
wobei in der chemischen Formel A
Ar³ durch die obige chemische Formel 2 dargestellt ist.

3. Zusammensetzung zur Herstellung eines Poly(imid-amid)Copolymers nach Anspruch 1 oder 2, wobei das Dianhydrid dargestellt durch die chemische Formel 3 durch die chemische Formel 4, die chemische Formel 5 oder eine Kombination davon dargestellt ist: 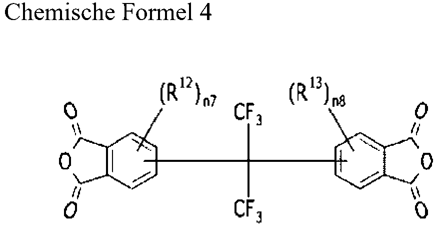 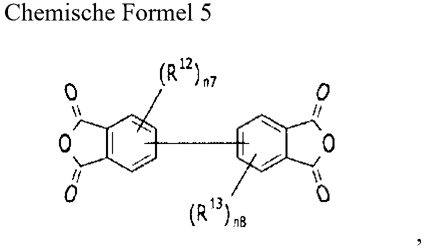 wobei in der chemischen Formel 4 und 5
R¹² und R¹³ gleich oder unterschiedlich sind und unabhängig ein Halogen, eine Hydroxygruppe, eine substituierte oder unsubstituierte aliphatische organische C1- bis C10-Gruppe, eine aromatische organische C6- bis C20-Gruppe, eine Alkoxygruppe der Formel -OR²⁰⁸, wobei R²⁰⁸ eine aliphatische organische C1- bis C10-Gruppe ist, oder eine Silylgruppe der Formel -SiR²⁰⁹R²¹⁰R²¹¹, wobei R²⁰⁹, R²¹⁰ und R²¹¹ gleich oder unterschiedlich sind und jeweils unabhängig Wasserstoff oder eine aliphatische organische C1- bis C10-Gruppe sind, sind, und
n7 und n8 jeweils unabhängig ganze Zahlen sind, die von 0 bis 3 reichen.

4. Zusammensetzung zur Herstellung eines Poly(imid-amid)Copolymers nach einem der Ansprüche 1 bis 3, wobei in der chemischen Formel 1 sowohl n1 als auch n2 0 sind.

5. Zusammensetzung zur Herstellung eines Poly(imid-amid)Copolymers nach einem der Ansprüche 1 bis 4, wobei in der chemischen Formel 2 R⁶ und R⁷ jeweils unabhängig -CF₃ sind und n5 und n6 jeweils unabhängig eine ganze Zahl von 0 sind.

6. Zusammensetzung zur Herstellung eines Poly(imid-amid)Copolymers nach einem der Ansprüche 1 bis 5, wobei die chemische Formel 1 durch die folgende chemische Formel dargestellt ist: 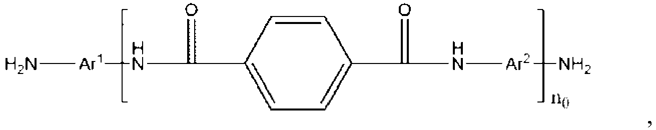 wobei in der obigen chemischen Formel
Ar¹ und Ar² gleich sind und jeweils unabhängig durch die folgende chemische Formel dargestellt sind: 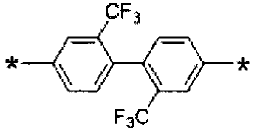 und
n0 das gleiche wie in der chemischen Formel 1 definiert ist.

7. Zusammensetzung zur Herstellung eines Poly(imid-amid)Copolymers nach Anspruch 3, wobei das Dianhydrid dargestellt durch die chemische Formel 3 eine Kombination aus dem Dianhydrid dargestellt durch die chemische Formel 4 und dem Dianhydrid dargestellt durch die chemische Formel 5 ist, wobei das Dianhydrid dargestellt durch die chemische Formel 4 und das Dianhydrid dargestellt durch die chemische Formel 5 in einem Molverhältnis von 40:60 bis 60:40 vorhanden sind.

8. Zusammensetzung zur Herstellung eines Poly(imid-amid)Copolymers nach einem der Ansprüche 1 bis 7, wobei in der chemischen Formel A Ar³ durch die folgende chemische Formel dargestellt ist:

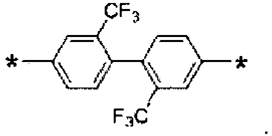

9. Zusammensetzung zur Herstellung eines Poly(imid-amid)Copolymers nach einem der Ansprüche 1 bis 8, wobei das Diamin dargestellt durch die chemische Formel 1 ein zahlenmittleres Molekulargewicht von 900 Dalton bis 2.500 Dalton aufweist.

10. Zusammensetzung zur Herstellung eines Poly(imid-amid)Copolymers nach einem der Ansprüche 1 bis 9, wobei in der chemischen Formel 1 n0 eine ganze Zahl größer als oder gleich 1 und weniger als oder gleich 20 ist.

## Revendications

1. Composition pour la préparation d'un copolymère poly(imide-amide), ladite composition comprenant une diamine représentée par la formule chimique 1, et un dianhydride représenté par la formule chimique 3 : 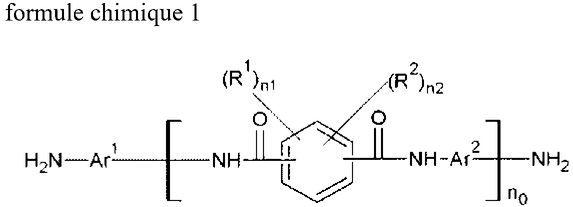 dans la formule chimique 1,
R¹ et R² étant identiques ou différents, et étant chacun indépendamment un halogène, un groupe hydroxyle, un groupe alkyle en C1 à C10 substitué ou non substitué, un groupe aryle en C6 à C20 substitué ou non substitué, ou un groupe alcoxy en C1 à C10 substitué ou non substitué,
n0 étant supérieur ou égal à 1,
n1 et n2 étant identiques ou différents, et étant chacun indépendamment un nombre entier de 0 à 4, à condition que n1 + n2 soit un nombre entier allant de 0 à 4, et
Ar₁ et Ar₂ étant identiques ou différents et étant chacun indépendamment représentés par la formule chimique 2 : 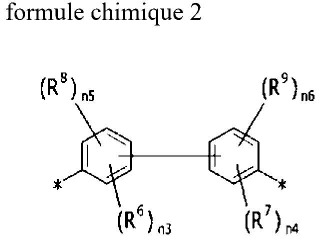 dans la formule chimique 2,
R⁶ et R⁷ étant identiques ou différents et étant chacun indépendamment un groupe attracteur d'électrons choisi parmi -CF₃, -CCl₃, -CBr₃, -Cl₃, -NO₂, -CN, -C(=O)CH₃ et -CO₂C₂H₅,
R⁸ et R⁹ étant identiques ou différents et étant chacun indépendamment un halogène, un groupe aliphatique en C1 à C10 substitué ou non substitué, un groupe aromatique en C6 à C20 substitué ou non substitué, un groupe alcoxy de formule -OR²⁰⁴, R²⁰⁴ étant un groupe organique aliphatique en C1 à C10, ou un groupe silyle de formule -SiR²⁰⁵R²⁰⁶R²⁰⁷, R²⁰⁵, R²⁰⁶ et R²⁰⁷ étant identiques ou différents et étant chacun indépendamment un hydrogène ou un groupe organique aliphatique en C1 à C10, et
n3 étant un entier de 1 à 4, n5 étant un entier de 0 à 3, à condition que n3 + n5 soit un entier allant de 1 à 4,
n4 étant un entier de 1 à 4, n6 étant un entier de 0 à 3, à condition que n4 + n6 soit un entier allant de 1 à 4 ; 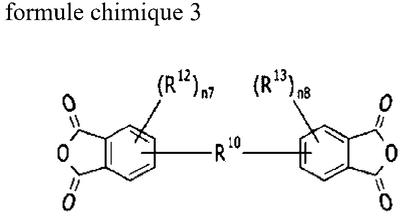 dans la formule chimique 3,
R¹⁰ étant une liaison simple, ou un groupe aliphatique en C1 à C30 substitué ou non substitué, un groupe organique alicyclique en C3 à C30 substitué ou non substitué, un groupe organique aromatique en C6 à C30 substitué ou non substitué, ou un groupe hétérocyclique en C2 à C30 substitué ou non substitué,
R¹² et R¹³ étant identiques ou différents et étant chacun indépendamment un halogène, un groupe hydroxyle, un groupe aliphatique en C1 à C10 substitué ou non substitué, un groupe aromatique en C6 à C20 substitué ou non substitué, un groupe alcoxy de formule -OR²⁰⁵, R²⁰⁵ étant un groupe organique aliphatique en C1 à C10, ou un groupe silyle de formule -SiR²⁰⁹R²¹⁰R²¹¹, R²⁰⁹, R²¹⁰ et R²¹¹ étant identiques ou différents et étant chacun indépendamment un hydrogène ou un groupe organique aliphatique en C1 à C10, et
n7 et n8 étant identiques ou différents et étant chacun indépendamment un nombre entier allant de 0 à 3,
ladite diamine représentée par la formule chimique 1 étant présente en une quantité de sorte que les unités structurelles d'amide dérivées de la diamine représentée par la formule chimique 1 soient présentes en une quantité de 65 pour cent en moles à 70 pour cent en moles sur la base du nombre total en moles des unités structurelles d'amide et des unités structurelles d'imide dans le copolymère poly(imide-amide) préparé à partir de la composition.

2. Composition pour la préparation d'un copolymère poly(imide-amide) selon la revendication 1, ladite composition comprenant en outre une diamine représentée par la formule chimique A :
formule chimique A H₂N-Ar³-NH₂
dans la formule chimique A,
Ar³ étant représenté par la formule chimique 2 ci-dessus.

3. Composition pour la préparation d'un copolymère poly(imide-amide) selon la revendication 1 ou 2, ledit dianhydride représenté par la formule chimique 3 étant représenté par la formule chimique 4, la formule chimique 5, ou une combinaison de celles-ci : 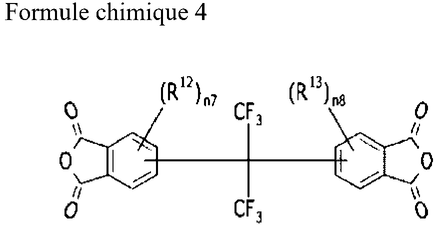 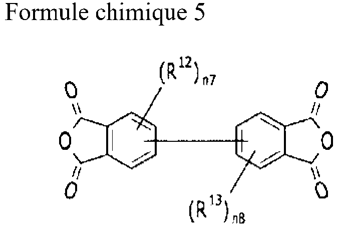 dans les formules chimiques 4 et 5,
R¹² et R¹³ étant identiques ou différents, et étant indépendamment un halogène, un groupe hydroxy, un groupe organique aliphatique en C1 à C10 substitué ou non substitué, un groupe organique aromatique en C6 à C20, un groupe alcoxy de formule -OR²⁰⁸, R²⁰⁸ étant un groupe organique aliphatique en C1 à C10, ou un groupe silyle de formule -SiR²⁰⁹R²¹⁰R²¹¹, R²⁰⁹, R²¹⁰ et R²¹¹ étant identiques ou différents, et étant chacun indépendamment de l'hydrogène ou un groupe organique aliphatique en C1 à C10, et
n7 et n8 étant chacun indépendamment des entiers allant de 0 à 3.

4. Composition pour la préparation d'un copolymère poly(imide-amide) selon l'une quelconque des revendications 1 à 3, dans la formule chimique 1, n1 et n2 étant tous deux égales à 0.

5. Composition pour la préparation d'un copolymère poly(imide-amide) selon l'une quelconque des revendications 1 à 4, dans la formule chimique 2, R⁶ et R⁷ étant chacun indépendamment -CF₃, et n5 et n6 étant chacun indépendamment un entier de 0.

6. Composition pour la préparation d'un copolymère poly(imide-amide) selon l'une quelconque des revendications 1 à 5, ladite formule chimique 1 étant représentée par la formule chimique suivante : 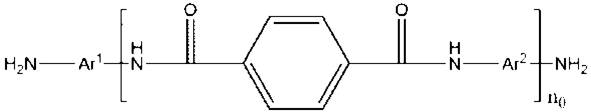 dans la formule chimique ci-dessus,
Ar¹ et Ar² étant identiques et étant chacun indépendamment représentés par la formule chimique suivante : 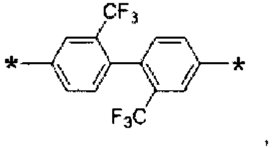
et
n0 étant le même que défini dans la formule chimique 1.

7. Composition pour la préparation d'un copolymère poly(imide-amide) selon la revendication 3, ledit dianhydride représenté par la formule chimique 3 étant une combinaison du dianhydride représenté par la formule chimique 4 et du dianhydride représenté par la formule chimique 5, ledit dianhydride représenté par la formule chimique 4 et ledit dianhydride représenté par la formule chimique 5 étant présents dans un rapport molaire de 40:60 à 60:40.

8. Composition pour la préparation d'un copolymère poly(imide-amide) selon l'une quelconque des revendications 1 à 7, dans la formule chimique A, Ar³ étant représenté par la formule chimique suivante :

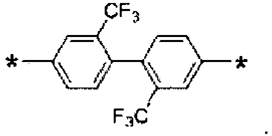

9. Composition pour la préparation d'un copolymère poly(imide-amide) selon l'une quelconque des revendications 1 à 8, ladite diamine représentée par la formule chimique 1 possédant un poids moléculaire moyen en nombre de 900 Daltons à 2500 Daltons.

10. Composition pour la préparation d'un copolymère poly(imide-amide) selon l'une quelconque des revendications 1 à 9, dans la formule chimique 1, n0 étant un nombre entier supérieur ou égal à 1 et inférieur ou égal à 20.
